(19) **European Patent Office**

Europäisches Patentamt
European Patent Office
Office européen des brevets

(11) **EP 3 960 812 A1**

(12) **EUROPEAN PATENT APPLICATION**
published in accordance with Art. 153(4) EPC

(43) Date of publication:
**02.03.2022 Bulletin 2022/09**

(21) Application number: **20795950.3**

(22) Date of filing: **25.03.2020**

(51) International Patent Classification (IPC):
**C08L 23/08** (2006.01) **C08L 23/10** (2006.01)
**C08L 53/00** (2006.01)

(52) Cooperative Patent Classification (CPC):
**C08L 23/08; C08L 23/10; C08L 53/00**

(86) International application number:
**PCT/JP2020/013266**

(87) International publication number:
**WO 2020/217829 (29.10.2020 Gazette 2020/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.04.2019 JP 2019083127**

(71) Applicant: **SUMITOMO CHEMICAL COMPANY,
LIMITED**
**Chuo-ku**
**Tokyo 104-8260 (JP)**

(72) Inventors:
• **SANADA, Toshiharu**
**Tokyo 104-8260 (JP)**
• **FUKURODA, Hiroshi**
**Chiba 299-0195 (JP)**

(74) Representative: **Winter, Brandl - Partnerschaft
mbB**
**Alois-Steinecker-Straße 22**
**85354 Freising (DE)**

(54) **PROPYLENE RESIN COMPOSITION AND MOLDED BODY**

(57) Provided is a propylene resin composition containing: (A) 30-65 parts by weight of a propylene-based polymer; (B) 10-40 parts by weight of an ethylene-α-olefin random copolymer; (C) 10-40 parts by weight of a filler; and (D) 0.1-10 parts by weight of an ethylene-α-olefin block copolymer. The total content of the components A-D is 100 parts by weight, the component D contains at most 70 weight% of a xylene soluble component at 20°C, and the density of the component D is 0.865-0.867 g/cm$^3$.

**EP 3 960 812 A1**

**Description**

TECHNICAL FIELD

The present invention relates to a propylene resin composition and a molded article.

BACKGROUND ART

Molded bodies made of propylene resin composition are used for automobile materials, home appliance materials, and other materials. For example, Patent Document 1 discloses a polypropylene resin composition containing crystalline polypropylene, a long-chain branched propylene-based polymer, a thermoplastic elastomer, and an inorganic filler.

PRIOR ART DOCUMENT

PATENT DOCUMENT

Patent Document 1: JP-A-2011-88955

SUMMARY OF THE INVENTION

PROBLEMS TO BE SOLVED BY THE INVENTION

In recent years, molded bodies used for automobile materials and other materials have been required to have high dimensional stability.
The present invention is directed to a propylene resin composition that can produce a molded article having high dimensional stability. The present invention is also directed to a molded article having high dimensional stability.

MEANS FOR SOLVING THE PROBLEMS

The present invention relates to the following inventions 1 to 5, but is not limited to these inventions.

[Invention 1]

A propylene resin composition containing:

(A) 30-65 parts by weight of a propylene-based polymer;
(B) 10-40 parts by weight of an ethylene-$\alpha$-olefin random copolymer;
(C) 10-40 parts by weight of a filler; and
(D) 0.1-10 parts by weight of an ethylene-$\alpha$-olefin block copolymer.

The total content of the components A-D is 100 parts by weight,

the component D contains at most 70 weight% of a xylene soluble component at 20°C, and
the component D has a density of 0.865-0.867 $g/cm^3$.

[Invention 2]

The propylene resin composition according to Invention 1, wherein the component D has a melt flow rate (190°C, 2.16 kg load) of 0.5-10 g/10 min.

[Invention 3]

The propylene resin composition according to Invention 1 or 2, further containing a component E:
(E) 0.1-5 parts by weight of a propylene-based polymer of which absolute value of a difference between a die swell ratio at a shear rate of 61 $sec^{-1}$ and a die swell ratio at a shear rate of 6080 $sec^{-1}$ is 0.35 or less.

[Invention 4]

The propylene resin composition according to Invention 3, wherein the component E has a crystallization time of 150 sec or less at 135°C.

[Invention 5]

A molded article containing the propylene resin composition according to any one of Inventions 1 to 4.

EFFECT OF THE INVENTION

The present invention provides a propylene resin composition that can produce a molded article having high dimensional stability-a small coefficient of linear expansion. The present invention also provides a molded article having high dimensional stability.

BRIEF DESCRIPTION OF THE DRAWINGS

Fig. 1 is a schematic view of an injection-molded article for evaluating the coefficient of linear expansion.
Fig. 2 is a schematic view of an injection-molded article for evaluating the hinge durability at the weld.

MODE FOR CARRYING OUT THE INVENTION

Definition

The term "propylene resin composition" as used herein refers to a composition containing a propylene-based polymer. The details will be described below.
The term "propylene-based polymer" as used herein will be described below in detail.
The term "a-olefin" as used herein refers to an aliphatic unsaturated hydrocarbon having a carbon-carbon unsaturated double bond at the $\alpha$ position.
The term "ethylene-$\alpha$-olefin random copolymer" as used herein refers to a random copolymer including a monomer unit derived from ethylene and a monomer unit derived from a C4 or higher (meaning that the number of carbon atoms is 4 or more, this applies to other similar expressions) $\alpha$-olefin. This random copolymer is substantially free of a monomer unit derived from propylene. The details will be described below.
The term "heterophasic propylene polymer material" as used herein refers to a mixture containing a polymer I containing 80 weight% or more of a monomer unit derived from propylene (provided that the total weight of the polymer (I) is 100 weight%) and a polymer II containing a monomer unit derived from propylene and a monomer unit derived from at least one $\alpha$-olefin selected from the group consisting of ethylene and C4-C12 $\alpha$-olefins.
The term "xylene insoluble component (also referred to as a "CXIS component")" as used herein refers to a p-xylene-insoluble component contained in a polymer. This component is a solid obtained by the following method:
About 2 g of the polymer is dissolved in boiling p-xylene for 2 hours to form a solution, and the solution is next cooled to 20°C to precipitate a solid.
The term "xylene soluble component (hereinafter also referred to as a "CXS component")" as used herein refers to a component other than the "CXIS component" in the polymer.
The term "filler" as used herein will be described below in detail.
The term "ethylene-$\alpha$-olefin block copolymer" as used herein refers to a block copolymer including a monomer unit derived from ethylene and a monomer unit derived from a C4 or higher $\alpha$-olefin. This copolymer is substantially free of a monomer unit derived from propylene. The details will be described below.
All numbers disclosed herein are approximate values, regardless of whether the word "about" or "approximately" is used in connection therewith. They may vary by 1%, 2%, 5%, or sometimes 10-20%. Whenever a numerical range with a lower limit $R^L$ and an upper limit $R^U$ is disclosed, any number falling within the range is specifically disclosed. In particular, the following numbers within the range are specifically disclosed. $R = R^L + k^* (R^U - R^L)$ (where k is a variable ranging from 1% to 100% with a 1% increment, i.e. k is 1%, 2%, 3%, 4%, 5%,... , 50%, 51%, 52%, ... , 95%, 96%, 97%, 98%, 99%, or 100%). Moreover, any numerical range defined by two numbers, R, as described above is also specifically disclosed.
Hereinafter, some embodiments of the present invention will be described in detail. The present invention is not limited to the following embodiments. As used herein, the notation "lower limit-upper limit" expressing a numerical range means "the lower limit or more and the upper limit or less", and the notation "upper limit-lower limit" means "the upper limit or less and the lower limit or more". In other words, these notations express numerical ranges including the upper limit and the lower limit.

Propylene Resin Composition

In the present invention, the "propylene resin composition (hereinafter also referred to simply as a resin composition)" includes a propylene-based polymer (A), an ethylene-$\alpha$-olefin random copolymer (B), a filler (C), and an ethylene-$\alpha$-olefin block copolymer (D). The components A-D are respectively present in amounts of 30-65 parts by weight, 10-40 parts by weight, 10-40 parts by weight, and 0.1-10 parts by weight relative to 100 parts by weight of the total content of the components A-D. Such a propylene resin composition can be molded into a molded article having high dimensional stability. The use of the propylene resin composition according to the present invention can produce a molded article by a simple method, such as injection molding, usually used to, for example, produce automobile molded products.

The components referred to as the "propylene-based polymer (A)" and the like are also referred to simply as a "component A" and the like.

Each component will be described below.

Propylene-Based Polymer (A)

The component A is a polymer having 50 weight% or more of a monomer unit derived from propylene. The absolute value of a difference between the die swell ratio at a shear rate of 61 sec$^{-1}$ and the die swell ratio at a shear rate of 6080 sec$^{-1}$ of the component A is greater than 0.35. Examples of the component A include a propylene homopolymer, a random copolymer of propylene and a monomer other than propylene, and a heterophasic propylene polymer material. The propylene resin composition according to the present invention may contain one component A or may contain two or more components A. In view of the rigidity and impact resistance of the molded article, the component A preferably includes at least one selected from the group consisting of a propylene homopolymer and heterophasic propylene polymer materials.

Propylene Homopolymer

When the component A includes a propylene homopolymer, the limiting viscosity ([$\eta$]) of the propylene homopolymer is preferably 0.10-2.00 dL/g, more preferably 0.50-1.50 dL/g, still more preferably 0.70-1.40 dL/g in view of the fluidity of the molten resin composition and the toughness of the molded article.

In this specification, the limiting viscosity (unit: dL/g) is measured at a temperature of 135°C by the following method using tetralin as a solvent.

The reduced viscosity at three points, concentrations of 0.1 g/dL, 0.2 g/dL, and 0.5 g/dL, is measured by using an Ubbelohde viscometer. The limiting viscosity is determined by plotting reduced viscosity against concentration and extrapolating the concentration to zero. The method for calculating the limiting viscosity by extrapolation is described in, for example, "Polymer Solution, Polymer Experiment 11" (published by Kyoritsu Shuppan Co., Ltd., 1982), page 491.

The molecular weight distribution (Mw/Mn) of the propylene homopolymer is preferably 3.0 or more, more preferably 4.0 or more. The molecular weight distribution of the component A may be 30.0 or less, or may be 25.0 or less. The molecular weight distribution of the component A is preferably 3.0-30.0, more preferably 4.0-25.0.

In this specification, the molecular weight distribution refers to the ratio (Mw/Mn) of a weight average molecular weight (Mw) to a number average molecular weight (Mn), which is calculated by using a weight average molecular weight (Mw) and a number average molecular weight (Mn) measured by gel permeation chromatography (GPC) under the following conditions.

Apparatus: HLC-8121 GPC/HT available from Tosoh Corporation
Separation column: three columns GMHHR-H(S)HT available from Tosoh Corporation
Measurement temperature: 140°C
Carrier: ortho-dichlorobenzene
Flow rate: 1.0 mL/min
Sample concentration: about 1 mg/mL
Sample injection volume: 400 $\mu$L
Detector: differential refractometer
Calibration curve making method: using standard polystyrene

The propylene homopolymer can be produced by, for example, polymerizing propylene using a polymerization catalyst.

Examples of the polymerization catalyst include Ziegler catalysts; Ziegler-Natta catalysts; a catalyst containing an alkylaluminoxane and a Group 4 transition metal compound having a cyclopentadienyl ring; a catalyst containing a Group 4 transition metal compound having a cyclopentadienyl ring, a compound that reacts with the transition metal compound to form an ionic complex, and an organoaluminum compound; and a catalyst produced by modifying inorganic particles (e.g., silica, clay minerals) with a catalyst component (e.g., a Group 4 transition metal compound having a cyclopentadienyl ring, a compound that forms an ionic complex, an organoaluminum compound) such that the catalyst component is supported on the inorganic particles.

Examples of the polymerization catalyst include catalysts disclosed in JP-A-61-218606, JP-A-5-194685, JP-A-7-216017, JP-A-9-316147, JP-A-10-212319, and JP-A-2004-182981.

A polymer prepared by prepolymerizing propylene in the presence of the above polymerization catalyst can also be used as a polymerization catalyst.

Examples of the polymerization method include bulk polymerization, solution polymerization, and gas phase polymerization. Bulk polymerization refers to polymerization using, as a medium, an olefin in the form of liquid at a polymerization temperature. Solution polymerization refers to polymerization in an inert hydrocarbon solvent, such as propane, butane, isobutane, pentane, hexane, heptane, or octane. Gas phase polymerization refers to polymerization of a gaseous monomer in a medium of the gaseous monomer.

Examples of the type of polymerization include batch polymerization, continuous polymerization, and a combination thereof.

The type of polymerization may be multi-stage polymerization using two or more polymerization reactors connected in series.

From industrial and economical point of view, continuous gas phase polymerization, or bulk-gas phase polymerization in which bulk polymerization and gas phase polymerization are performed continuously is preferred.

Various conditions (e.g., polymerization temperature, polymerization pressure, monomer concentration, catalyst loading amount, polymerization time) in the polymerization process are appropriately set according to the molecular structure of the intended polymer.

To remove, for example, the residual solvent contained in the polymer and ultra-low molecular weight oligomers generated as by-products during production, the polymer may be dried at a temperature equal to or lower than the melting temperature of the polymer as desired after the polymerization process. Examples of the drying method include the methods described in JP-A-55-75410 and Japanese Patent No. 2565753.

Random Copolymer of Propylene and Monomer Other Than Propylene

The random copolymer of propylene and a monomer other than propylene includes a monomer unit derived from propylene and a monomer unit derived from a monomer other than propylene. The random copolymer preferably includes 0.01-20 weight% of a monomer unit derived from a monomer other than propylene based on the weight of the random copolymer.

Examples of the monomer other than propylene include ethylene and C4-C12 α-olefins. In particular, the monomer other than propylene is preferably at least one selected from the group consisting of ethylene and C4-C10 α-olefins, more preferably at least one selected from the group consisting of ethylene, 1-butene, 1-hexene, and 1-octene, still more preferably at least one selected from the group consisting of ethylene and 1-butene.

Examples of the random copolymer include a propylene-ethylene random copolymer, a propylene-1-butene random copolymer, a propylene-1-hexene random copolymer, a propylene-1-octene random copolymer, a propylene-ethylene-1-butene random copolymer, a propylene-ethylene-1-hexene random copolymer, and a propylene-ethylene-1-octene random copolymer.

When the component A includes a random copolymer of propylene and a monomer other than propylene, the limiting viscosity ([η]) of the random copolymer is preferably 0.10-2.00 dL/g, more preferably 0.50-1.50 dL/g, still more preferably 0.70-1.40 dL/g in view of the fluidity of the molten resin composition.

The molecular weight distribution (Mw/Mn) of the random polymer is preferably 3.0 or more, more preferably 4.0 or more. The molecular weight distribution of the random polymer may be 30.0 or less, or may be 25.0 or less. The molecular weight distribution of the random polymer is preferably 3.0-30.0, more preferably 4.0-25.0.

The random copolymer can be produced by, for example, polymerizing propylene and a monomer other than propylene using a polymerization catalyst, a polymerization method, and the type of polymerization that can be used to produce the propylene homopolymer.

Heterophasic Propylene Polymer Material

The heterophasic propylene polymer material can be produced through, for example, the first polymerization process for forming the polymer I and the second polymerization process for forming the polymer II.

Examples of the polymerization catalyst, the polymerization method, and the type of polymerization in these polymerization processes include the same as those described above.

With regard to the heterophasic propylene polymer material, the total amount of the polymer I and the polymer II in the heterophasic propylene polymer material may be 100 weight%, provided that the total weight of the heterophasic propylene polymer material is 100 weight%.

As described above, the polymer I contains 80 weight% or more of a monomer unit derived from propylene. For example, the polymer I may be a propylene homopolymer, or may contain a monomer unit derived from a monomer other than propylene. When the polymer I contains a monomer unit derived from a monomer other than propylene, the amount of this monomer unit may be 0.01 weight% or more and 20 weight% or less based on the total weight of the polymer I.

Examples of the monomer other than propylene include ethylene and C4 and higher $\alpha$-olefins. In particular, the monomer other than propylene is preferably at least one selected from the group consisting of ethylene and C4-C10 $\alpha$-olefins, more preferably at least one selected from the group consisting of ethylene, 1-butene, 1-hexene, and 1-octene, still more preferably at least one selected from the group consisting of ethylene and 1-butene.

Examples of the copolymer including a monomer unit derived from the monomer other than propylene include a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer.

In view of the dimensional stability of the molded article, the polymer I is preferably a propylene homopolymer, a propylene-ethylene copolymer, a propylene-1-butene copolymer, or a propylene-ethylene-1-butene copolymer, more preferably a propylene homopolymer.

The amount of the polymer I is preferably 50-99 weight%, more preferably 60-95 weight% based on the total weight of the heterophasic propylene polymer material.

As described above, the polymer II includes a monomer unit derived from propylene and a monomer unit derived from at least one $\alpha$-olefin selected from the group consisting of ethylene and C4-C12 $\alpha$-olefins. Preferably, the polymer II includes 30 weight% or more of a monomer unit derived from at least one $\alpha$-olefin selected from the group consisting of ethylene and C4-C12 $\alpha$-olefins and includes a monomer unit derived from propylene.

In the polymer II, the amount of the monomer unit derived from at least one $\alpha$-olefin selected from the group consisting of ethylene and C4-C12 $\alpha$-olefins may be 30-70 weight%, or may be 35-60 weight%.

In the polymer II, the at least one $\alpha$-olefin selected from the group consisting of ethylene and C4-C12 $\alpha$-olefins is preferably at least one selected from the group consisting of ethylene and C4-C10 $\alpha$-olefins, more preferably at least one selected from the group consisting of ethylene, 1-butene, 1-hexene, 1-octene, and 1-decene, still more preferably at least one selected from the group consisting of ethylene and 1-butene.

Examples of the polymer II include a propylene-ethylene copolymer, a propylene-ethylene-1-butene copolymer, a propylene-ethylene-1-hexene copolymer, a propylene-ethylene-1-octene copolymer, a propylene-ethylene-1-decene copolymer, a propylene-1-butene copolymer, a propylene-1-hexene copolymer, a propylene-1-octene copolymer, and a propylene-1-decene copolymer. Among these, a propylene-ethylene copolymer, a propylene-1-butene copolymer, and a propylene-ethylene-1-butene copolymer are preferred, and a propylene-ethylene copolymer is more preferred.

The amount of the polymer II is preferably 1-50 weight%, more preferably 5-40 weight% based on the total weight of the heterophasic propylene polymer material.

The amount of the xylene insoluble component (CXIS component) in the heterophasic propylene polymer material is preferably 50-99 weight%, more preferably 60-95 weight% based on the total weight of the heterophasic propylene polymer material.

The amount of the xylene soluble component (CXS component) in the heterophasic propylene polymer material is preferably 1-50 weight%, more preferably 5-40 weight% based on the total weight of the heterophasic propylene polymer material.

In the present invention, the CXIS component in the heterophasic propylene polymer material is composed mainly of the polymer I, and the CXS component in the heterophasic propylene polymer material is composed mainly of the polymer II.

Examples of the heterophasic propylene polymer material include a (propylene)-(propylene-ethylene) polymer material, a (propylene)-(propylene-ethylene-1-butene) polymer material, a (propylene)-(propylene-ethylene-1-hexene) polymer material, a (propylene)-(propylene-ethylene-1-octene) polymer material, a (propylene)-(propylene-1-butene) polymer material, a (propylene)-(propylene-1-hexene) polymer material, a (propylene)-(propylene-1-octene) polymer material, a (propylene)-(propylene-1-decene) polymer material, a (propylene-ethylene)-(propylene-ethylene) polymer material, a (propylene-ethylene)-(propylene-ethylene-1-butene) polymer material, a (propylene-ethylene)-(propylene-ethylene-1-hexene) polymer material, a (propylene-ethylene)-(propylene-ethylene-1-octene) polymer material, a (propylene-ethylene)-(propylene-ethylene-1-decene) polymer material, a (propylene-ethylene)-(propylene-1-butene) polymer material, a (propylene-ethylene)-(propylene-1-hexene) polymer material, a (propylene-ethylene)-(propylene-1-octene) polymer material, a (propylene-ethylene)-(propylene-1-decene) polymer material, a (propylene-1-butene)-(propylene-ethylene) polymer material, a (propylene-1-butene)-(propylene-ethylene-1-butene) polymer material, a (propylene-1-butene)-(propylene-ethylene-1-hexene) polymer material, a (propylene-1-butene)-(propylene-ethylene-1-octene) polymer material, a (propylene-1-butene)-(propylene-ethylene-1-decene) polymer material, a (propylene-1-butene)-(propylene-1-butene) polymer material, a (propylene-1-butene)-(propylene-1-hexene) polymer material, a (propylene-1-butene)-(propylene-1-octene) polymer material, a (propylene-1-butene)-(propylene-1-decene) polymer material, a (propylene-1-hexene)-(propylene-1-hexene) polymer material, a (propylene-1-hexene)-(propylene-1-octene) polymer material, a (propylene-1-hexene)-(propylene-1-decene) polymer material, a (propylene-1-octene)-(propylene-1-octene) polymer material, and a (propylene-1-octene)-(propylene-1-decene) polymer material.

The "(propylene)-(propylene-ethylene) polymer material" as described herein means "a heterophasic propylene polymer material in which the polymer I is a propylene homopolymer and the polymer II is a propylene-ethylene copolymer". The same applies to other similar expressions.

The heterophasic propylene polymer material is preferably a (propylene)-(propylene-ethylene) polymer material, a (propylene)-(propylene-ethylene-1-butene) polymer material, a (propylene-ethylene)-(propylene-ethylene) polymer material, a (propylene-ethylene)-(propylene-ethylene-1-butene) polymer material, or a (propylene-1-butene)-(propylene-1-butene) polymer material, more preferably a (propylene)-(propylene-ethylene) polymer material.

The limiting viscosity ($[\eta]$I) of the polymer I is preferably 0.10-2.00 dL/g, more preferably 0.50-1.50 dL/g, still more preferably 0.70-1.40 dL/g.

The limiting viscosity ($[\eta]$II) of the polymer II is preferably 1.00-10.00 dL/g, more preferably 2.00-10.00 dL/g, still more preferably 2.00-9.00 dL/g.

The ratio ($[\eta]$II/$[\eta]$I) of the limiting viscosity ($[\eta]$II) of the polymer II to the limiting viscosity ($[\eta]$I) of the polymer I is preferably 1-20, more preferably 1-10.

The method for measuring the limiting viscosity ($[\eta]$I) of the polymer I involves, for example, extracting the formed polymer I from a reactor for forming the polymer I and measuring the limiting viscosity of the polymer I.

The limiting viscosity ($[\eta]$II) of the polymer II is calculated from, for example, the following formula (6) using the limiting viscosity ($[\eta]$Total) of the heterophasic propylene polymer material, the limiting viscosity ($[\eta]$I) of the polymer I, and the amounts of the polymer II and the polymer I.

$$[\eta]II = ([\eta]Total - [\eta]I \times XI)/XII \quad ...(6)$$

$[\eta]$Total: the limiting viscosity (dL/g) of the heterophasic propylene polymer material
$[\eta]$I: the limiting viscosity (dL/g) of the polymer I
XI: the ratio of the weight of the polymer I to the total weight of the heterophasic propylene polymer material (the weight of the polymer I/the weight of the heterophasic propylene polymer material)
XII: the ratio of the weight of the polymer II to the total weight of the heterophasic propylene polymer material (the weight of the polymer II/the weight of the heterophasic propylene polymer material)

Here, XI and XII can be obtained from the mass balance in the polymerization.

XII may be calculated from the following formula by measuring the heat of fusion of the polymer I and the heat of fusion of the heterophasic propylene polymer material.

$$XII = 1 - (\Delta Hf)T/(\Delta Hf)P$$

$(\Delta Hf)$T: the heat of fusion (J/g) of the heterophasic propylene polymer material
$(\Delta Hf)$P: the heat of fusion (J/g) of the polymer I

The limiting viscosity ($[\eta]$CXIS) of the CXIS component is preferably 0.10-2.00 dL/g, more preferably 0.50-1.50 dL/g, still more preferably 0.70-1.40 dL/g.

The limiting viscosity ($[\eta]$CXS) of the CXS component is preferably 1.00-10.00 dL/g, more preferably 2.00-10.00 dL/g, still more preferably 2.00-9.00 dL/g.

The ratio ($[\eta]$CXS/$[\eta]$CXIS) of the limiting viscosity ($[\eta]$CXS) of the CXS component to the limiting viscosity ($[\eta]$CXIS) of the CXIS component is preferably 1-20, more preferably 1-10.

The molecular weight distribution (Mw(I)/Mn(I)) of the polymer I is preferably 3.0 or more, more preferably 4.0 or more.

The molecular weight distribution (Mw(CXIS)/Mn(CXIS)) of the CXIS component is preferably 3.0 or more, more preferably 4.0 or more.

The isotactic pentad fraction (also referred to as an mmmm fraction) of the component A is preferably 0.950 or more, more preferably 0.970 or more, in view of the rigidity and dimensional stability of the molded article made of the resin composition. The isotactic pentad fraction of the component A may be, for example, 1.000 or less.

The isotactic pentad fraction means the isotactic fraction in terms of pentad units. More specifically, the isotactic pentad fraction refers to the fraction of five contiguous meso-linked monomer units derived from propylene in terms of pentad units. When the target component is a copolymer, the isotactic pentad fraction refers to a value measured for a chain of monomer units derived from propylene.

In this specification, the isotactic pentad fraction is measured by $^{13}$C-NMR spectroscopy. Specifically, the isotactic pentad fraction is the fraction of the area of the mmmm peak in the area of the total absorption peak in the methyl carbon region obtained by $^{13}$C-NMR spectroscopy. The method for measuring the isotactic pentad fraction by $^{13}$C-NMR spectroscopy is described in, for example, A. Zambelli et al., Macromolecules, 6, 925 (1973). The absorption peaks obtained by $^{13}$C-NMR spectroscopy are assigned in accordance with Macromolecules, 8, 687 (1975).

The melt flow rate of the component A at a temperature of 230°C and a load of 2.16 kgf is preferably 5 g/10 min or more, more preferably 10-300 g/10 min in view of the moldability of the resin composition.

In this specification, the melt flow rate is measured in accordance with JIS K7210. The melt flow rate may hereinafter be referred to as an MFR. The MFR of the component (A), the component (B), the component (E), and the propylene resin composition is measured at a temperature of 230°C. The MFR of the component (D) is measured at a temperature of 190°C.

Ethylene-$\alpha$-Olefin Random Copolymer (B)

With regard to the component B, the total amount of the monomer unit derived from ethylene and the monomer unit derived from a C4 or higher $\alpha$-olefin in the component B may be 100 weight%, provided that the total weight of the component B is 100 weight%.

Examples of the C4 or higher $\alpha$-olefin include C4-C12 $\alpha$-olefins. Examples of C4-C12 $\alpha$-olefins include 1-butene, 1-pentene, 1-hexene, 4-methyl-1-pentene, 1-octene, and 1-decene. Among these, 1-butene, 1-hexene, and 1-octene are preferred. The $\alpha$-olefins may be $\alpha$-olefins having a cyclic structure, such as vinylcyclopropane and vinylcyclobutane.

Examples of the component B include an ethylene-1-butene copolymer, an ethylene-1-hexene copolymer, an ethylene-1-octene copolymer, an ethylene-1-decene copolymer, an ethylene-(3-methyl-1-butene) copolymer, and a copolymer of ethylene and an $\alpha$-olefin having a cyclic structure.

In the component B, the amount of the monomer unit derived from a C4 or higher $\alpha$-olefin is preferably 1-49 weight%, more preferably 5-49 weight%, still more preferably 24-49 weight%, based on the total weight of the component B.

The melt flow rate of the component B at a temperature of 230°C and a load of 2.16 kgf is preferably 0.1-80 g/10 min.

In view of the impact resistance of the molded article, the density of the component B is preferably 0.85-0.89 g/cm$^3$, more preferably 0.85-0.88 g/cm$^3$, still more preferably 0.85-0.87 g/cm$^3$.

Method for Producing Component B

The component B can be produced by polymerizing ethylene and a C4 or higher $\alpha$-olefin using a polymerization catalyst.

Examples of the polymerization catalyst include homogeneous catalysts, such as metallocene catalysts, and Ziegler-Natta catalysts.

Examples of homogeneous catalysts include a catalyst containing an alkylaluminoxane and a Group 4 transition metal compound having a cyclopentadienyl ring; a catalyst containing a Group 4 transition metal compound having a cyclopentadienyl ring, a compound that reacts with the transition metal compound to form an ionic complex, and an organoaluminum compound; and a catalyst produced by modifying inorganic particles (e.g., silica, clay minerals) with a catalyst component (e.g., a Group 4 transition metal compound having a cyclopentadienyl ring, a compound that forms an ionic complex, an organoaluminum compound) such that the catalyst component is supported on the inorganic particles.

Examples of Ziegler-Natta catalysts include a catalyst containing a titanium-containing solid transition metal component and an organometallic component in combination.

The component may be a commercial product. Examples of commercial products of the component B include ENGAGE (registered trademark) available from Dow Chemical Japan Ltd.; TAFMER (registered trademark) available from Mitsui Chemicals, Inc.; NEO-ZEX (registered trademark) and ULT-ZEX (registered trademark) available from Prime Polymer Co., Ltd.; and EXCELLEN FX (registered trademark), SUMIKATHENE (registered trademark), and ESPRENE SPO (registered trademark) available from Sumitomo Chemical Co., Ltd.

Filler (C)

The propylene resin composition according to the present invention further contains a filler (C).

Examples of the component C include inorganic fillers and organic fillers. The propylene resin composition according to the present invention may contain one component C or may contain two or more components C.

Examples of inorganic fillers include glass, silicate minerals, alumina, silica, silicon dioxide, titanium oxide, iron oxide, aluminum oxide, magnesium oxide, antimony oxide, barium ferrite, strontium ferrite, beryllium oxide, magnesium hydroxide, aluminum hydroxide, basic magnesium carbonate, calcium carbonate, magnesium carbonate, carbonate minerals, calcium sulfate, magnesium sulfate, basic magnesium sulfate, calcium sulfite, carbon black, and cadmium sulfide.

Examples of organic fillers include polyester, aromatic polyamides, cellulose, and vinylon.

The filler may have a plate shape, a needle shape, or a fibrous shape.

In view of the rigidity, impact resistance, and dimensional stability of the molded article, the component C is preferably an inorganic filler, more preferably talc, plate-like silicate mineral.

In view of the rigidity, impact resistance, and dimensional stability of the molded article, the average particle size D50[L] of the component C is preferably 20.0 $\mu$m or less, more preferably 15.0 $\mu$m or less. The average particle size D50[L] of the component C may be 2.0 $\mu$m or more, more preferably 4.0 $\mu$m or more. The average particle size D50[L] of the component C is preferably 2.0-20.0 $\mu$m, more preferably 4.0-15.0 $\mu$m. In an aspect, the average particle size D50[L] of the component C may be 7.0-15.0 $\mu$m.

In view of the rigidity, impact resistance, and dimensional stability of the molded article, the average particle size D50[S] of the component C is preferably 5.0 $\mu$m or less, more preferably 3.0 $\mu$m or less.

The average particle size D50[S] of the component C may be 0.5 $\mu$m or more, more preferably 1.0 $\mu$m or more. The average particle size D50[S] of the component C is preferably 0.5-5.0 $\mu$m, more preferably 1.0-3.0 $\mu$m. In an aspect, the average particle size D50[S] of the component C may be 2.0-5.0 $\mu$m.

In view of the rigidity and dimensional stability of the molded article, the ratio (D50[L]/D50[S]) of the average particle size D50[L] to the average particle size D50[S] of the component C may be 1.5 or more, or 2.5 or more. The ratio D50[L]/D50[S] may be 10 or less, or 8 or less. The ratio D50[L]/D50[S] may be 1.5-10, 1.5-8, 2.5-10, or 2.5-8. In an aspect, the ratio D50[L]/D50[S] may be 3.0-8.

The "average particle size D50[L]" is determined in accordance with the method defined in JIS R1629 based on the volume-based particle size distribution data measured by laser diffraction and means the particle size (particle size at 50%) at which the cumulative number of particles from the smallest particle size reaches 50% in the particle size distribution data. The particle size thus defined is typically referred to as a "particle size at 50%" and denoted by "D50".

In this specification, the "average particle size D50[S]" is determined in accordance with the method defined in JIS R1619 based on the volume-based particle size distribution data measured by centrifugation and means the particle size (particle size at 50%) at which the cumulative number of particles from the smallest particle size reaches 50% in the particle size distribution data.

As the ratio (D50[L]/D50[S]) of the average particle size D50[L] to the average particle size D50[S] of the component C increases, the rigidity and dimensional stability of the molded article increases.

Ethylene-$\alpha$-Olefin Block Copolymer (D)

The component D according to the present invention is an ethylene-$\alpha$-olefin block copolymer having 70 weight% or less of a xylene soluble component (provided that the total weight of the component D is 100 weight%) and having a density of 0.865-0.867 g/cm$^3$. Since an ethylene-$\alpha$-olefin random copolymer normally contains 90 weight% or more of a xylene soluble component, an "ethylene-$\alpha$-olefin copolymer having 70 weight% or less of a xylene soluble component" is regarded as an "ethylene-$\alpha$-olefin block copolymer".

The ethylene-$\alpha$-olefin block copolymer is a block copolymer in which semi-crystalline segments (also referred to as "hard segments") are linked to amorphous segments (also referred to as "soft segments") through covalent bonds. The semi-crystalline segments and the amorphous segments can be produced separately by changing the ratio of $\alpha$-olefin and ethylene in segments. The component D is generated by using a catalytic system making use of a chain shuttling agent, which transfers growing chains between two different catalysts having different monomer selectivity, in a single polymerization reactor. The component D is available under the trade name INFUSE from The Dow Chemical Company, Midland, Michigan.

The component D has two or more chemically distinct regions or segments (also referred to as "blocks") joined linearly or in pendent or grafted fashion. The ethylene-α-olefin block copolymer may be a multi-block copolymer.

The term "multi-block copolymer" refers to a polymer including two or more chemically distinct regions or segments (also referred to as "blocks") joined linearly, that is, a polymer including chemically differentiated units, which are joined end-to-end with respect to polymerized ethylenic functionality, rather than in pendent or grafted fashion. The blocks differ in the amount or type of comonomer incorporated therein, the density, the degree of crystallinity, the crystallite size that may be attributable to a polymer of such a composition, the type or degree of tacticity (isotactic or syndiotactic), regio-regularity or regio-irregularity, the amount of branching, including long chain branching or hyper-branching, the homogeneity, or any other chemical or physical properties. The multi-block copolymer may be an ethylene/α-olefin multi-block copolymer and has the following characteristics: (a) a molecular fraction which elutes between about 40°C and about 130°C when fractionated using temperature rising elution fractionation (TREF), wherein the fraction has a block index of at least 0.5 and up to 1 and a molecular weight distribution (PDI, Mw/Mn, MWD) greater than 1.3; or (b) an average block index greater than 0 and up to 1.0 and an MWD greater than 1.3. Moreover, an ethylene multi-block interpolymer typically has at least one of the following characteristics: (i) a molecular weight distribution greater than 1.3; (ii) a density less than 0.90 g/cc; (iii) a 2% secant modulus less than 150 mPa as determined in accordance with ASTM D-882-02; (iv) a melting point below 125°C; (v) an olefin content of at least 10 wt% and less than 80 wt% based on the weight of interpolymer; (vi) a Tg below -35°C; and (vii) a melt index (MI) less than 100 g/10 min. The multi-block copolymer is disclosed in U.S. patent application Ser. No. 11/376,835, filed March 15, 2006, which is hereby incorporated by reference in its entirety. The propylene/α-olefin multi-block copolymer is disclosed in U.S. patent application Ser. No. 11/686,444, filed March 15, 2007, which is hereby incorporated by reference in its entirety.

In other embodiments, the block copolymers do not usually have a third type of block, which includes different comonomer(s). In other embodiments, the hard segments and the soft segments each have monomers or comonomers substantially randomly distributed within the block. In other words, neither the hard segments nor the soft segments include two or more sub-segments (or sub-blocks) of distinct composition, such as a tip segment, which has a composition substantially different from that of the rest of the block.

The multi-block polymers typically include various amounts of hard segments and soft segments. The hard segments refer to blocks of polymerized units in which ethylene is present in an amount greater than about 95 weight%, preferably greater than about 98 weight% based on the weight of the polymer. In other words, the comonomer content (content of monomers other than ethylene) in the hard segments is less than about 5 weight%, preferably less than about 2 weight% based on the weight of the polymer. In some embodiments, the hard segments include all or substantially all ethylene. On the other hand, the soft segments refer to blocks of polymerized units in which the comonomer content (content of monomers other than ethylene) is greater than about 5 weight%, preferably greater than about 8 weight%, greater than about 10 weight%, or greater than about 15 weight% based on the weight of the polymer. In some embodiments, the comonomer content in the soft segments can be greater than about 20 weight%, greater than about 25 weight%, greater than about 30 weight%, greater than about 35 weight%, greater than about 40 weight%, greater than about 45 weight%, greater than about 50 weight%, or greater than about 60 weight%. In an aspect, the component D includes soft segments of the ethylene-α-olefin random copolymer.

The soft segments can often be present in a block copolymer from about 1 weight% to about 99 weight% of the total weight of the block copolymer, preferably from about 5 weight% to about 95 weight%, from about 10 weight% to about 90 weight%, from about 15 weight% to about 85 weight%, from about 20 weight% to about 80 weight%, from about 25 weight% to about 75 weight%, from about 30 weight% to about 70 weight%, from about 35 weight% to about 65 weight%, from about 40 weight% to about 60 weight%, or from about 45 weight% to about 55 weight% of the total weight of the block copolymer. The hard segments can be present in similar ranges. The soft segment weight percentage and the hard segment weight percentage can be calculated based on the data obtained from DSC or NMR. Such methods and calculations are disclosed in a concurrently filed U.S. patent application Ser. No. 11/376,835, entitled "Ethylene/α-Olefin Block Interpolymers", filed on March 15, 2006, in the name of Colin L. P. Shan, Lonnie Hazlitt, et. al. and assigned to Dow Global Technologies Inc., the disclosure of which is incorporated by reference herein in its entirety.

The term "crystalline" as used herein refers to a polymer that possesses a first order transition or crystalline melting point (Tm) as determined by differential scanning calorimetry (DSC) or equivalent technique.

The term may be used interchangeably with the term "semi-crystalline". The term "amorphous" refers to a polymer lacking a crystalline melting point as determined by differential scanning calorimetry (DSC) or equivalent technique.

In an aspect, the density of the component D is 0.865-0.867 g/cm$^3$, preferably 0.866-0.867g/cm$^3$.

In an aspect, the melt flow rate of the component D at a temperature of 190°C and a load of 2.16 kgf is 0.5-10 g/10 min, preferably 1-8 g/10 min.

The MFR of the component D is preferably 0.5 g/10 min or more in view of the moldability (fluidity) of the resin composition, preferably 10 g/10 min or less in view of the dimensional stability of the obtained molded article and the hinge durability at the weld.

The weld is a linear mark generated between resin portions without close contact between molten resin portions when a molten resin composition flows into a mold cavity from two gates so that molten resin portions meet with each other, or when molten resin portions separated in a mold cavity meet with each other. With loose contact between molten resin portions, the weld has low hinge durability and easily breaks.

Propylene-Based Polymer (E) with Property I

The component E is a polymer having 50 weight% or more of a monomer unit derived from propylene. The absolute value of a difference between the die swell ratio at a shear rate of 61 sec$^{-1}$ and the die swell ratio at a shear rate of 6080 sec$^{-1}$ of the component E is 0.35 or less (property I). The propylene resin composition according to the present invention preferably contains the component E in view of the dimensional stability and the hinge durability at the weld.

In general, a propylene-based polymer having long chain branching has the property I.

Long chain branching refers to a branched structure having molecular chains in which the main chain has several tens or more carbon atoms. Long chain branching is distinguished from short chain branching with several carbon atoms formed by copolymerization with an $\alpha$-olefin, such as 1-butene.

The component E is, for example, at least one long-chain branched propylene-based polymer selected from the group consisting of a long-chain branched propylene polymer (E1), a long-chain branched propylene-ethylene block copolymer (E2) including a propylene polymer portion and an ethylene-propylene random copolymer portion, and a long-chain branched propylene-ethylene random copolymer (E3).

Property I

The absolute value of a difference between the die swell ratio at a shear rate of 61 sec$^{-1}$ and the die swell ratio at a shear rate of 6080 sec$^{-1}$ of the component E is 0.35 or less, preferably 0.2 or less, more preferably 0.1 or less.

The die swell ratio at each shear rate is obtained by the following method. By using a capillary rheometer (e.g., Capilograph 1D available form Toyo Seiki Seisaku-sho, Ltd.) provided with a capillary having a capillary diameter (D) of 1 mm and a capillary length (L) of 40 mm, that is, L/D = 40, a molten sample is extruded from the end of the capillary at a test temperature of 220°C and a shear rate of 61 sec$^{-1}$ (piston pushing speed: 5 mm/min) to prepare a strand. The diameter of the strand at a position of 12 mm down from the end of the capillary in the vertical direction is measured by using a laser. The die swell ratio is represented by the following formula.

$$\text{Die swell ratio} = \text{strand diameter (mm)}/\text{capillary diameter (mm)}$$

Similarly, a molten sample is extruded at a test temperature of 220°C and a shear rate of 6080 sec$^{-1}$ (piston pushing speed: 500 mm/min) to determine the die swell ratio at a shear rate of 6080 sec$^{-1}$.

After the die swell ratio at each shear rate is obtained, the absolute value of a difference between the die swell ratio at a shear rate of 61 sec$^{-1}$ and the die swell ratio at a shear rate of 6080 sec$^{-1}$ is calculated. The absolute value $\Delta$ of a difference between the die swell ratios is represented by the following formula.

$$\Delta = |(\text{die swell ratio at shear rate of 6080 sec}^{-1}) - (\text{die swell ratio at shear rate of 61 sec}^{-1})|$$

The die swell ratio at a shear rate of 61 sec$^{-1}$ of the component E is preferably 1.7 or more, more preferably 1.9 or more.

Preferably, the component E has at least one of the following properties II to III.

Property II: the melt flow rate (MFR) (230°C, 2.16 kg load) is 0.1-10 g/10 min.

Property III: the crystallization time at 135°C is 150 sec or less.

Property II

The MFR (230°C, 2.16 kg load) of the component E is 0.1-10 g/10 min, preferably 0.1-9 g/10 min, more preferably 1-9 g/10 min.

In view of the fluidity (moldability) of the resin composition, the MFR of the component E is preferably 0.1 g/10 min or more. To prevent stringing and improve the balance of physical properties (impact strength), the MFR of the component E is preferably 10 g/10 min or less.

The MFR of the component E is measured by the method described in JIS K7210 (measurement temperature: 230°C, load: 2.16 kg).

Property III

The crystallization time of the component E at 135°C is 150 sec or less, preferably 145 sec or less, more preferably 140 sec or less.

As the number of long chain branches in the propylene-based polymer increases, the crystallization time shortens.

Crystallization Rate (Crystallization Time, T1/2, Unit: Second)

The crystallization rate was measured by using a differential scanning calorimeter (DSC VII model, available from PerkinElmer Co., Ltd). With regard to the measurement conditions, 10 mg of a specimen was placed in a nitrogen atmosphere in advance and subjected to isothermal crystallization at a crystallization temperature of 135°C for 10 minutes, and the half width of the peak of the obtained endothermic curve was measured as a crystallization time. The shorter the crystallization time, the higher the crystallization rate.

Method for Producing Component E

Branching is usually achieved by using a specific catalyst, that is, a specific single site catalyst, or by chemical modification. Reference is made to EP 1892264 for preparation of branched polypropylene by use of a specific catalyst. Reference is made to EP 0879830 A1 for branched polypropylene obtained by chemical modification. In these cases, branched polypropylene is also referred to as high melt strength polypropylene. The high melt strength polypropylene (HMS-PP) according to the present invention is obtained by chemical modification of polypropylene (PP) as described below in more detail. The HMS-PP is commercially available under Daploy (trade name) from Borealis AG or under WAYMAX (trade name) from Japan Polypropylene Corporation.

Content of Each Component

In view of the dimensional stability (coefficient of linear expansion) of the molded article, the content of the component A in the propylene resin composition according to the present invention may be 30-65 parts by weight, 40-65 parts by weight, or 40-60 parts by weight, relative to 100 parts by weight of the total content of the components A-D.

In view of the dimensional stability (coefficient of linear expansion) of the molded article, the content of the component B in the propylene resin composition according to the present invention may be 10-40 parts by weight, 10-30 parts by weight, or 10-25 parts by weight, relative to 100 parts by weight of the total content of the components A-D.

In view of the dimensional stability (coefficient of linear expansion) of the molded article, the content of the component C in the propylene resin composition according to the present invention may be 10-40 parts by weight, 10-35 parts by weight, or 15-25 parts by weight, relative to 100 parts by weight of the total content of the components A-D. In an aspect, the content of the component C may be 25-35 parts by weight, 30-35 parts by weight relative to 100 parts by weight of the total content of the components A-D in view of elastic modulus.

In view of the dimensional stability (coefficient of linear expansion) and hinge durability of the molded article, the content of the component D in the propylene resin composition according to the present invention may be 0.1-10 parts by weight, 1-10 parts by weight, or 2-8 parts by weight, relative to 100 parts by weight of the total content of the components A-D.

When the propylene resin composition according to the present invention contains the component E, the content of the component E is preferably 5 parts by weight or less, 0.1-5 parts by weight, 0.5-4 parts by weight, or 1-3 parts by weight relative to 100 parts by weight of the total content of the components A-D in view of the balance among hinge durability, moldability (fluidity), and dimensional stability (coefficient of linear expansion).

The total content of the components A-D or the total content of the components A-E is preferably 50 weight% or more based on the total weight of the propylene resin composition according to the present invention.

Method for Producing Propylene Resin Composition

The propylene resin composition according to the present invention can be produced by melt-kneading the material components. The melt-kneading temperature may be 180°C or higher, 180-300°C, or 180-250°C.

A Banbury mixer, a single-screw extruder, a corotating twin-screw extruder, or other machines can be used for melt-kneading.

The material components may be kneaded in any order. For example, the components A-D (or the components A-E) may be kneaded all together, or some of the components A-D (or the components A-E) may be kneaded first, and the resulting kneaded material may be next kneaded with the other components.

The propylene resin composition may have any shape and may have, for example, a strand shape, a sheet shape, a plate shape, or a pellet form. The resin composition in a pellet form can be produced by, for example, forming the resin composition into a strand and then cutting the strand into an appropriate length.

In view of the moldability of the resin composition, and the production stability for producing the molded article, the resin composition to be molded into the molded article is preferably in the form of pellet with a length of about 1-50 mm.

The propylene resin composition of the present invention may contain other components. Examples of other components include neutralizers, antioxidants, UV absorbers, nucleating agents, lubricants, antistatic agents, anti-blocking agents, processing aids, organic peroxides, colorants (e.g., inorganic pigments, organic pigments, pigment dispersants), foaming agents, foam nucleating agents, plasticizers, flame retardants, cross-linking agents, cross-linking aids, brightening agents, anti-bacterial agents, and light diffusers. Examples of nucleating agents include carboxylic acid metal salts, such as lithium benzoate, sodium benzoate, aluminum benzoate, 4-tert butylbenzoic acid aluminum salt, sodium adipate; acid phosphate metal salts other than sodium bis (4-tert butyl phenyl) phosphate and the compound represented by general formula (1); and polyhydric alcohol derivatives, such as dibenzylidene sorbitol, bis(methylbenzylidene) sorbitol, and bis(dimethylbenzylidene) sorbitol. Of these nucleating agents, carboxylic acid metal salts and bis(dimethylbenzylidene) sorbitol are preferred in view of dimensional stability. The propylene resin composition according to the present invention may contain one of these components or may contain two or more of these components.

When the propylene resin composition according to the present invention contains a nucleating agent, the content of the nucleating agent may be 0.01-1.0 parts by weight, 0.05-0.5 parts by weight, or 0.1-0.5 parts by weight relative to 100 parts by weight of the total content of the components A-D in view of dimensional stability.

Properties of Propylene Resin Composition

In an aspect, the melt flow rate (temperature 230°C, load 2.16 kgf) of the propylene resin composition according to the present invention is preferably 15-70 g/10 min, 25-65 g/10 min, or 35-60 g/10 min. In view of moldability, the MFR of the propylene resin composition is preferably 15 g/10 min or more. In view of the impact strength of the obtained molded article, the MFR of the propylene resin composition is preferably 70 g/10 min or less.

In an aspect, the melt flow rate (temperature 230°C, load 2.16 kgf) of the propylene resin composition according to the present invention is preferably 15-50 g/10 min, may be 15-35 g/10 min, or 15-30 g/10 min in view of dimensional stability.

In an aspect, the density of the propylene resin composition according to the present invention is preferably 1.1 g/cm$^3$ or less, more preferably 1.08 g/cm$^3$ or less, still more preferably 1.06 g/cm$^3$ or less.

In an aspect, the density of the propylene resin composition according to the present invention is preferably 1.08-1.2 g/cm$^3$, more preferably 1.1-1.18 g/cm$^3$ in view of dimensional stability.

The density of the propylene resin composition according to the present invention is measured by the water displacement method, which is the method A described in JIS K 7112.

The flexural modulus of the propylene resin composition according to the present invention was measured in accordance with the method defined in JIS K7171. By using a specimen, 4.0 mm thick, molded by the method of the injection-molded article production (1), the flexural modulus was measured at a span length of 64 mm, a loading rate of 2.0 mm/min, and a measurement temperature of 23°C.

The propylene resin composition according to the present invention can be used as a material to be molded into a molded article. The propylene resin composition according to the present invention can be used as a material for injection molding. Hereinafter, an example injection-molded article produced by using the propylene resin composition according to the present invention as a material for injection molding will be described.

Molded Article

The molded article according to the present invention is composed of the propylene resin composition according to the present invention. The molded article according to the present invention has high dimensional stability. The molded article is preferably an injection-molded article. In an aspect, the injection-molded article according to the present invention has high hinge durability because the weld rarely breaks.

The injection-molded article can be produced by an injection molding method. Examples of the injection molding method include a typical injection molding method, an injection foam molding method, a supercritical injection foam molding method, an ultra-high speed injection molding method, an injection compression molding method, a gasassisted injection molding method, a sandwich molding method, a sandwich foam molding method, and an insert-outsert molding method. The injection-molded article may have any shape.

The injection-molded article according to the present invention can be preferably used for, for example, automobile materials, home appliance materials, and containers, and is particularly suitable for automobile interiors and exteriors. Examples of automobile interior and exterior parts include door trims, pillars, instrument panels, and bumpers.

EXAMPLES

The present invention will be described below in more detail by way of Examples. The present invention is not limited to these Examples.

In Examples and Comparative Examples, the following materials were used.

[Component A: Propylene-Based Polymer]

The following propylene-based polymers (BCPP1, BCPP2, BCPP3, BCPP4, HOMOPP1, HOMOPP2) were prepared as the component A.

BCPP1: (Propylene)-(Propylene-Ethylene) Polymer Material
"C7100-50NA" available from Braskem
MFR (measured at temperature of 230°C and load of 2.16 kgf): 52 g/10 min
Limiting viscosity: ($[\eta]$CXIS) 0.95 dL/g, ($[\eta]$CXS) 1.61 dL/g
Isotactic pentad fraction: 0.9615
CXIS component content: 74.3 weight%
Mw/Mn of CXIS component: 4.4
CXS component content: 25.7 weight%
Ethylene content in propylene-ethylene random copolymer: 48.9 weight%
Die swell ratio at shear rate of 6080 $sec^{-1}$: 1.35
Die swell ratio at shear rate of 61 $sec^{-1}$: 0.94
Difference between die swell ratios: 0.41

BCPP2: (Propylene)-(Propylene-Ethylene) Polymer Material

Produced by gas phase polymerization in the presence of a polymerization catalyst obtained by the method described in Example 1 in JP-A-2004-182981.

MFR (measured at temperature of 230°C and load of 2.16 kgf): 129 g/10 min
Limiting viscosity: ($[\eta]$CXIS) 1.02 dL/g, ($[\eta]$CXS) 3.96 dL/g
Isotactic pentad fraction: 0.9842
CXIS component content: 93.6 weight%
Mw/Mn of CXIS component: 6.3
CXS component content: 6.4 weight%
Ethylene content in propylene-ethylene random copolymer: 39.0 weight%
Die swell ratio at shear rate of 6080 $sec^{-1}$: 1.80
Die swell ratio at shear rate of 61 $sec^{-1}$: 0.94
Difference between die swell ratios: 0.86

BCPP3: (Propylene)-(Propylene-Ethylene) Polymer Material

Produced by gas phase polymerization in the presence of a polymerization catalyst obtained by the method described in Example 1 in JP-A-2004-182981.

MFR (measured at temperature of 230°C and load of 2.16 kgf): 43 g/10 min
Limiting viscosity: ($[\eta]$CXIS) 1.15 dL/g, ($[\eta]$CXS) 1.80 dL/g

Isotactic pentad fraction: 0.9843
CXIS component content: 81.1 weight%
Mw/Mn of CXIS component: 6.8
CXS component content: 18.9 weight%
Ethylene content in propylene-ethylene random copolymer: 49.5 weight%
Die swell ratio at shear rate of 6080 sec$^{-1}$: 1.98
Die swell ratio at shear rate of 61 sec$^{-1}$: 1.25
Difference between die swell ratios: 0.73

BCPP4: (Propylene)-(Propylene-Ethylene) Polymer Material

Produced by gas phase polymerization in the presence of a polymerization catalyst obtained by the method described in Example 1 in JP-A-2004-182981.

MFR (measured at temperature of 230°C and load of 2.16 kgf): 18 g/10 min
Limiting viscosity: ([η]CXIS) 1.15 dL/g, ([η]CXS) 7.60 dL/g
Isotactic pentad fraction: 0.9832
CXIS component content: 75.7 weight%
Mw/Mn of CXIS component: 6.8
CXS component content: 24.3 weight%
Ethylene content in propylene-ethylene random copolymer: 41.1 weight%
Die swell ratio at shear rate of 6080 sec$^{-1}$: 2.17
Die swell ratio at shear rate of 61 sec$^{-1}$: 1.48
Difference between die swell ratios: 0.69

HOMOPP1: Propylene Homopolymer

Produced by gas phase polymerization in the presence of a polymerization catalyst obtained by the method described in Example 1 in JP-A-2004-182981.

MFR (measured at temperature of 230°C and load of 2.16 kgf): 107 g/10 min
Limiting viscosity ([η]): 0.92 dL/g
Isotactic pentad fraction: 0.9811
Mw/Mn: 5.4
Die swell ratio at shear rate of 6080 sec$^{-1}$: 1.54
Die swell ratio at shear rate of 61 sec$^{-1}$: 0.83
Difference between die swell ratios: 0.71

HOMOPP2: Propylene Homopolymer

Produced by gas phase polymerization in the presence of a polymerization catalyst obtained by the method described in Example 1 in JP-A-2004-182981.

MFR (measured at temperature of 230°C and load of 2.16 kgf): 139 g/10 min
Limiting viscosity ([η]): 1.04 dL/g
Isotactic pentad fraction: 0.9843
Mw/Mn: 7.0
Die swell ratio at shear rate of 6080 sec$^{-1}$: 2.22
Die swell ratio at shear rate of 61 sec$^{-1}$: 1.12
Difference between die swell ratios: 1.10

In BCPP1 to BCPP4, the "ethylene content in propylene-ethylene random copolymer" refers to the ethylene content in the polymer II (the amount of the monomer unit derived from ethylene based on the total weight of the polymer II).
The MFR, the limiting viscosity, and the isotactic pentad fraction were measured in accordance with the above methods. The CXIS component content, and the CXS component content, the ethylene content in the polymer II, and the molecular weight distribution were calculated in accordance with the following methods.

CXIS Component Content and CXS Component Content

Two grams of a heterophasic propylene polymer material (hereinafter, the "weight of the heterophasic propylene polymer material" is denoted by "a") was weighed and dissolved by heating in boiling xylene for 2 hours. Next, the resulting solution was cooled to 20°C and filtered through filter paper. The separated filtrate was concentrated under reduced pressure in a rotary evaporator to provide a CXS component. The obtained CXS component was weighed (hereinafter, the "weight of the CXS component" is denoted by "b"). The CXIS component content and the CXS component content in the heterophasic propylene polymer material were calculated from the following formulas using the values a and b. The solid residue on the filter paper was vacuum-dried to provide a CXIS component. The obtained CXIS component was used to evaluate the molecular weight distribution.

$$\text{CXS component content (weight\%)} = (b/a) \times 100$$

$$\text{CXIS component content (weight\%)} = 100 - \text{CXS}$$

$$\text{component content (weight\%)}$$

Ethylene Content in Polymer II

The ethylene content in the polymer II was determined from the $^{13}$C-NMR spectrum measured under the following conditions on the basis of the report (Macromolecules, 15, 1150-1152 (1982)) by Kakugo et al. The $^{13}$C-NMR spectrum was measured under the following conditions using a sample of about 200 mg of the heterophasic propylene polymer material uniformly dissolved in 3 mL of ortho-dichlorobenzene in a test tube with a diameter of 10 mm.

Measurement temperature: 135°C
Pulse repetition time: 10 seconds
Pulse width: 45°
Number of scans: 2500

Molecular Weight Distribution

The molecular weight distribution of the propylene homopolymer was obtained by measuring the weight average molecular weight (Mw(A)) and number average molecular weight (Mn(A)) of the propylene homopolymer by GPC and calculating the ratio (Mw/Mn) of Mw to Mn. The molecular weight distribution of the CXIS component was obtained by measuring the weight average molecular weight (Mw(A)) and number average molecular weight (Mn(A)) of the CXIS component obtained in the above procedure by GPC and calculating the ratio (Mw/Mn) of Mw to Mn. The GPC measurement conditions are as described above.

Component B: Ethylene-$\alpha$-Olefin Random Copolymer

The following ethylene-$\alpha$-olefin random copolymers (EBR and EOR1) were prepared as the component B. The MFR, the CXIS component content, and the CXS component content were measured in accordance with the above methods.

EBR: Ethylene-1-Butene Random Copolymer

"ENR 7467" available from The Dow Chemical Company Density: 0.862 g/cm[3]
MFR (measured at temperature of 230°C and load of 2.16 kgf): 2.5 g/10 min
CXIS component content: 0.0 weight%
CXS component content: 100.0 weight%

EOR1: Ethylene-1-Octene Random Copolymer

"EG 8842" available from The Dow Chemical Company Density: 0.857 g/cm$^3$
MFR (measured at temperature of 230°C and load of 2.16 kgf): 2.7 g/10 min
CXIS component content: 1.4 weight%
CXS component content: 98.6 weight%

Component C: Filler

The following fillers (TALC1 and TALC2) were prepared as the component C.

TALC1: Talc

"Jetfine 3CA" available from Imerys

Average particle size D50[L] (laser diffraction, particle size at 50%): 4.39 μm
Average particle size D50[S] (centrifugation, particle size at 50%): 1.73 μm

TALC2: Talc

"HAR T84" available from Imerys

Average particle size D50[L] (laser diffraction, particle size at 50%): 12.60 μm
Average particle size D50[S] (centrifugation, particle size at 50%): 3.47 μm

The average particle size D50[L] of talc was measured after dispersing particles under the following conditions, in accordance with the method defined in JIS R1629 using MICROTRAC particle size analyzer MT-3300EXII available from Nikkiso Co., Ltd.

Particle Dispersion Process

Dispersion Medium: ethanol
Device: homogenizer
Output: 40 W
Process time: 10 minutes

The D50[S] was measured after dispersing particles under the following conditions, in accordance with the method defined in JIS R1619 using a centrifugal particle size distribution analyzer SA-CP3 available from Shimadzu Corporation.

Particle Dispersion Process

Dispersion Medium: ethanol
Device: W-113MkII available from Honda Electronics Co., Ltd.
Output: 110 W, 24 kHz
Process time: 10 minutes

Component D: Ethylene-α-Olefin Block Copolymer

The following ethylene-α-olefin block copolymer (OBC1) was prepared as the component D. The MFR, the CXIS component content, and the CXS component content were measured in accordance with the above methods.

OBC1: Ethylene-1-Octene Block Copolymer

"INFUSE D9507" available from The Dow Chemical Company

Density: 0.866 g/cm$^3$
MFR (measured at temperature of 190°C and load of 2.16 kgf): 5 g/10 min
CXIS component content: 40.3 weight%
CXS component content: 59.7 weight%

OBC2: Ethylene-1-Octene Block Copolymer

"INFUSE D9100" available from The Dow Chemical Company

Density: 0.877 g/cm$^3$
MFR (measured at temperature of 190°C and load of 2.16 kgf): 1 g/10 min
CXIS component content: 82.8 weight%
CXS component content: 17.2 weight%

Component E: Propylene-Based Polymer (E) with Property I

The following propylene-based polymer (HMS1) was prepared as the component E. The MFR and the molecular weight distribution were measured in accordance with the above methods. The crystallization time and the absolute value of a difference between the die swell ratios were measured by the following methods.

HMS1: Propylene Homopolymer

"WB140HMS" available from Borealis

MFR (measured at temperature of 230°C and load of 2.16 kgf): 1.8 g/10 min
Mw/Mn: 4.7
Die swell ratio at shear rate of 6080 sec$^{-1}$: 2.22
Die swell ratio at shear rate of 61 sec$^{-1}$: 2.18
Absolute value of difference between die swell ratios: 0.04
Crystallization time: 132 sec

HMS2: Propylene Homopolymer

"MFX8" available from Japan Polypropylene Corporation

MFR (measured at temperature of 230°C and load of 2.16 kgf): 1.0 g/10 min
Mw/Mn: 4.1
Die swell ratio at shear rate of 6080 sec$^{-1}$: 2.15
Die swell ratio at shear rate of 61 sec$^{-1}$: 2.24
Absolute value of difference between die swell ratios: 0.09
Crystallization time: 639 sec

HMS3: Propylene Homopolymer

"MFX3" available from Japan Polypropylene Corporation

MFR (measured at temperature of 230°C and load of 2.16 kgf): 8.9 g/10 min
Mw/Mn: 3.4
Die swell ratio at shear rate of 6080 sec$^{-1}$: 2.10
Die swell ratio at shear rate of 61 sec$^{-1}$: 1.93
Absolute value of difference between die swell ratios: 0.17
Crystallization time: 848 sec

HMS4: (Propylene)-(Propylene-Ethylene) Polymer Material

"EX8000" available from Japan Polypropylene Corporation

MFR (measured at temperature of 230°C and load of 2.16 kgf): 1.3 g/10 min

Mw/Mn: 6.8
CXIS component content: 94.5 weight%
CXS component content: 5.5 weight%
Die swell ratio at shear rate of 6080 sec$^{-1}$: 2.15
Die swell ratio at shear rate of 61 sec$^{-1}$: 1.97
Difference between die swell ratios: 0.18
Crystallization time: 481 sec

Crystallization time (T1/2, unit: sec)

The crystallization rate was measured by using a differential scanning calorimeter (DSC VII model, available from PerkinElmer Co., Ltd). With regard to the measurement conditions, 10 mg of a specimen was placed in a nitrogen atmosphere in advance and subjected to isothermal crystallization at a crystallization temperature of 135°C for 10 minutes, and the half width of the peak of the obtained endothermic curve was measured as a crystallization time.

Method for Measuring Absolute Value Δ of Difference Between Die Swell Ratios (Unit: -)

By using a capillary rheometer (Capilograph 1D available form Toyo Seiki Seisaku-sho, Ltd.) provided with a capillary having a capillary diameter (D) of 1 mm and a capillary length (L) of 40 mm, that is, L/D = 40, a molten composition was extruded from the end of the capillary at a test temperature of 220°C and a shear rate of 61 sec$^{-1}$ (piston pushing speed: 5 mm/min) and a shear rate of 6080 sec$^{-1}$ (piston pushing speed: 500 mm/min) to prepare a strand. The diameter of the strand at a position of 12 mm down from the end of the capillary in the vertical direction was measured by using a laser. The die swell ratio at each shear rate is represented by the following formula.

$$\text{Die swell ratio} = \text{strand diameter (mm)/capillary diameter (mm)}$$

After the die swell ratio at each shear rate was obtained, the absolute value of a difference between the die swell ratio at a shear rate of 61 sec$^{-1}$ and the die swell ratio at a shear rate of 6080 sec$^{-1}$ was calculated.
In other words, the absolute value Δ of a difference between the die swell ratios is represented by the following method.

$$\Delta = |(\text{die swell ratio at shear rate of 6080 sec}^{-1}) - (\text{die swell ratio at shear rate of 61 sec}^{-1})|$$

The propylene resin compositions in Example 9 and Example 10 according to the present invention each contain, as other components, 0.2 parts by weight of nucleating agent calcium 1,2-cyclohexanedicarboxylate (content 66 weight%) (Hyperform HPN-20E available from Milliken Japan K.K.) relative to 100 parts by weight of the propylene resin composition.

Examples 1 to 10, Comparative Examples 1 to 4

Production of Propylene Resin Composition

The propylene-based polymers (BCPP1, BCPP2, BCPP3, BCPP4, HOMOPP1, HOMOPP2), the ethylene-α-olefin random copolymers (EBR, EOR1), the fillers (TALC1, TALC2), the ethylene-α-olefin block copolymers (OBC1, OBC2), and the propylene-based polymers having the property I (HMS1, HMS2, HMS3, HMS4) were prepared in the amounts shown in Table 1.
The prepared components were uniformly premixed with a Henschel mixer or tumbler, and the resulting mixture was then kneaded and extruded by using a twin-screw kneading extruder (TEX44αII-49BW-3V model available from The Japan Steel Works, LTD.) under vent suction at an extrusion rate of 70 kg/hr, 200°C, and a screw rotation speed of 300 rpm to produce resin compositions. The physical properties of the obtained resin compositions are shown in Table 1 below.

Production of Injection-Molded Article for Evaluating Density and Flexural Modulus

The obtained resin compositions were injection-molded under the following conditions within the ranges described in JIS K7152 to produce injection-molded bodies for evaluating the density. The resin compositions melted in an injection molding machine were supplied into a mold cavity from the injection molding machine through the gate.

Injection molding machine: M70 available from Meiki Co., Ltd. (mold clamping force: 70 tons, cylinder diameter: 32 mm), mold cavity shape: ISO mold, type A
Cylinder temperature: 197°C
Mold temperature: 38°C
Injection speed: 20 mm/sec
Cooling time: 8 seconds

Production of Injection-Molded Article for Evaluating Coefficient of Linear Expansion

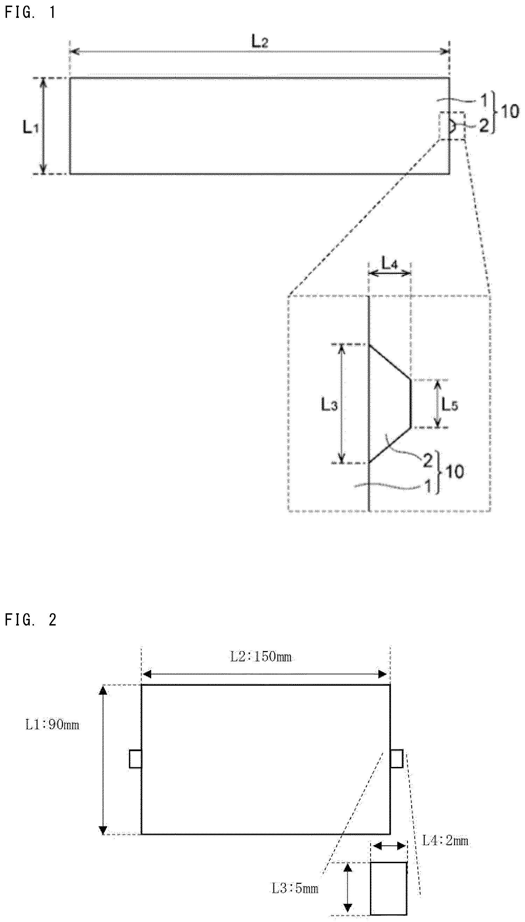

The obtained resin compositions were injection-molded under the following conditions to produce injection-molded bodies used for evaluation shown in Fig. 1. The resin compositions melted in an injection molding machine were supplied into a mold cavity from the injection molding machine through the gate.

Injection molding machine: SE180D available from Sumitomo Heavy Industries, Ltd. (mold clamping force: 180 tons, cylinder diameter: 50 mm)
Mold cavity shape: 100 mm (width) × 400 mm (length) × 3 mm (thickness)
Gate: one fan gate at center of 100-mm side surface
Cylinder temperature: 220°C
Mold temperature: 50°C
Injection speed: 23 mm/sec
Cooling time: 30 seconds

Fig. 1 is a schematic view of an injection-molded article used for evaluation. An injection-molded article 10 shown in Fig. 1 includes a first resin section 1, which corresponds to the mold shape, and a second resin section 2, which corresponds to the gate shape. The first resin section 1 is a plate-shaped resin section with a width L1 of 100 mm, a length L2 of 400 mm, and a thickness (not shown) of 3 mm. In the injection-molded bodies formed in Examples and Comparative Examples, the lengths L3, L4, and L5 of the sides and the thickness (not shown) of the second resin section 2 were 15 mm, 5 mm, 4 mm, and 2 mm, respectively. The main part of each injection-molded article is the first resin section 1 (hereinafter, the part corresponding to the "first resin section 1" is also referred to as an "injection-molded article").

Evaluation of Dimensional Stability

The dimensional stability was evaluated by measuring the coefficient of linear expansion using the obtained injection-molded bodies. The coefficient of linear expansion was measured by the following method using a thermomechanical analyzer (TMA/SS6100 available from SII NanoTechnology Inc).
A specimen 5 × 10 × 3 (mm) was cut out from a central part of the injection-molded article in the longitudinal direction. The specimen was set in the analyzer, and the temperature was raised from -20°C to 130°C at a heating rate of 5 °C/min to remove residual strain that occurred at molding.
Subsequently, the specimen was set in the analyzer again in order to measure a dimensional change in the MD (resin flow direction, the direction parallel to L2 in Fig. 1) or the TD (the direction perpendicular to the MD, the direction parallel to L1 in Fig. 1) that occurred at molding, and the dimensions at 23°C were accurately measured. The temperature was raised from -20°C to 80°C at a heating rate of 5°C/min, and the dimensional changes in the MD and the TD during the heating were measured. The dimensional change per unit length per unit temperature was determined as the coefficient of linear expansion. The smaller the coefficient of linear expansion, the better the dimensional stability. The mean of the coefficient of linear expansion in the MD and the coefficient of linear expansion in the TD (MDTD mean coefficient of linear expansion) is shown in Table 1.

Evaluation of Hinge Durability at Weld

A specimen 30 × 150 × 3 (mm) was cut out from a central part of an injection-molded article described below in the transverse direction. By using a bending tester (available from Toyo Seiki Seisaku-sho, Ltd.), the opposite ends of the specimen were fixed, and the specimen was bent in the horizontal direction and then returned to linear form, and next bent in the opposite direction and then returned to linear form. The number of repetition of this process until the weld broke was counted.

Production of Injection-Molded Article for Evaluating Hinge Durability at Weld

The obtained resin compositions were injection-molded under the following conditions to produce injection-molded bodies used for evaluation shown in Fig. 2. The resin compositions melted in an injection molding machine were supplied into a mold cavity from the injection molding machine through two gates.

Injection molding machine: SE130DU available from Sumitomo Heavy Industries, Ltd. (mold clamping force: 130 tons, cylinder diameter: 40 mm)
Mold cavity shape: 90 mm (width) × 150 mm (length) × 3 mm (thickness)
Gate: two gates at centers of opposite 90-mm side surfaces
Cylinder temperature: 220°C
Mold temperature: 50°C
Injection speed: 30 mm/sec
Cooling time: 30 seconds

Fig. 2 is a schematic view of an injection-molded article for evaluating the hinge durability at the weld. An injection-molded article 10 shown in Fig. 2 includes a first resin section 1, which corresponds to the mold shape, a second resin section 2, which corresponds to the gate shape, and a third resin section 3, which similarly corresponds to the gate shape on the opposite side. The first resin section 1 is a plate-shaped resin section with a width L1 of 90 mm, a length L2 of 150 mm, and a thickness (not shown) of 3 mm. In the injection-molded bodies formed in Examples and Comparative Examples, the lengths L3 and L4 of the sides and the thickness (not shown) of the second resin section 2 were 5 mm, 2 mm, and 3 mm, respectively.
The length of each side of the third resin section 3 is the same as that of the second resin section 2. The main part of each injection-molded article is the first resin section 1 (hereinafter, the part corresponding to the "first resin section 1" is also referred to as an "injection-molded article").

[Table 1]

| | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 |
|---|---|---|---|---|---|---|---|---|---|---|---|---|---|---|---|
| Component A | BCPP1 | 16 | - | 16 | 16 | 16 | 16 | 16 | 16 | - | - | 16 | 16 | 16 | 16 |
| | BCPP2 | 15 | - | 15 | 15 | 15 | 15 | 15 | 15 | - | - | 15 | 15 | 15 | 15 |
| | BCPP3 | - | 18.5 | - | - | - | - | - | - | 18.5 | 18.5 | - | - | - | - |
| | BCPP4 | - | 4 | - | - | - | - | - | - | 4 | 4 | - | - | - | - |
| | HOMOPP1 | 25.5 | - | 27.5 | 25.5 | 25.5 | 25.5 | 25.5 | 25.5 | - | - | 32.5 | 30.5 | 27.5 | 40.5 |
| | HOMOPP2 | - | 32.5 | - | - | - | - | - | - | 19 | 19 | - | - | - | - |
| Component B | EBR | 10 | 9 | 10 | 10 | 10 | 10 | - | 15 | 9 | 9 | 10 | 10 | 10 | - |
| | EOR1 | 5 | 7.5 | 5 | 5 | 5 | 5 | 15 | - | 7.5 | 7.5 | 5 | 5 | 5 | - |
| | EOR2 | - | - | - | - | - | - | - | - | - | - | - | - | - | - |
| Component C | TALC1 | 21.5 | 21.5 | 21.5 | 21.5 | 21.5 | 21.5 | 21.5 | 21.5 | 35 | - | 21.5 | 21.5 | 21.5 | 21.5 |
| | TALC2 | | | | | | | | | - | 35 | | | | |
| Component D | OBC1 | 5 | 5 | 5 | 5 | 5 | 5 | 5 | 5 | 5 | 5 | - | - | - | 5 |
| | OBC2 | - | - | - | - | - | - | - | - | - | - | - | - | 5 | - |
| Component E | HMS1 | 2 | 2 | - | - | - | - | 2 | 2 | 2 | 2 | - | 2 | - | 2 |
| | HMS2 | - | - | - | 2 | - | - | - | - | - | - | - | - | - | - |
| | HMS3 | - | - | - | - | 2 | - | - | - | - | - | - | - | - | - |
| | HMS4 | - | - | - | - | - | 2 | - | - | - | - | - | - | - | - |
| Other components | Nucleating agent | - | - | - | - | - | - | - | - | 0.2 | 0.2 | - | - | - | - |
| MFR | | 43 | 40 | 51 | 44 | 46 | 44 | 42 | 44 | 20 | 18 | 61 | 52 | 47 | 80 |
| Flexural modulus (MPa) | | 2224 | 2253 | 2215 | 2203 | 2152 | 2179 | 2256 | 2276 | 2606 | 2897 | 2605 | 2669 | 2320 | 3418 |
| Density (g/cm3) | | 1.05 | 1.05 | 1.05 | 1.05 | 1.04 | 1.05 | 1.04 | 1.05 | 1.17 | 1.17 | 1.05 | 1.05 | 1.05 | 1.06 |

| | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 |
|---|---|---|---|---|---|---|---|---|---|---|---|---|---|---|
| MDTD mean coefficient of linear expansion $(10^{-5}/°C)$ | 5.0 | 4.5 | 5.4 | 5.5 | 5.5 | 5.6 | 5.2 | 5.2 | 3.1 | 2.4 | 6.1 | 6.1 | 5. 9 | 6.4 |
| Hinge durability at weld | 60 | 50 | 57 | 73 | 50 | 89 | 55 | 50 | 51 | 45 | 17 | 32 | 19 | 8 |

Table 1 indicates the molded bodies according to Examples have low MDTD mean coefficient of linear expansion and thus high dimensional stability. In other words, it is confirmed that the propylene resin composition according to the present invention can produce a molded article having high dimensional stability, and that the molded article according to the present invention has high dimensional stability. In addition, the molded bodies according to Examples are found to have high hinge durability at the weld because of a large number of repetition until the weld breaks in the bending test.

DESCRIPTION OF REFERENCE SIGNS

1   First resin section
2   Second resin section
10   Injection-molded article

**Claims**

1. A propylene resin composition comprising:

   (A) 30-65 parts by weight of a propylene-based polymer;
   (B) 10-40 parts by weight of an ethylene-$\alpha$-olefin random copolymer;
   (C) 10-40 parts by weight of a filler; and
   (D) 0.1-10 parts by weight of an ethylene-$\alpha$-olefin block copolymer,

   wherein a total content of the components A-D is 100 parts by weight,

   the component D contains at most 70 weight% of a xylene soluble component at 20°C, and
   the component D has a density of 0.865-0.867 g/cm$^3$.

2. The propylene resin composition according to claim 1, wherein the component D has a melt flow rate (190°C, 2.16 kg load) of 0.5-10 g/10 min.

3. The propylene resin composition according to claim 1 or 2, further comprising a component E:
   (E) 0.1-5 parts by weight of a propylene-based polymer of which absolute value of a difference between a die swell ratio at a shear rate of 61 sec$^{-1}$ and a die swell ratio at a shear rate of 6080 sec$^{-1}$ is 0.35 or less.

4. The propylene resin composition according to claim 3, wherein the component E has a crystallization time of 150 sec or less at 135°C.

5. A molded article comprising the propylene resin composition according to any one of claims 1 to 4.

FIG. 1

FIG. 2

<table>
<tr><td colspan="2" align="center"><b>INTERNATIONAL SEARCH REPORT</b></td><td colspan="2">International application No.<br>PCT/JP2020/013266</td></tr>
</table>

| | |
|---|---|
| A. CLASSIFICATION OF SUBJECT MATTER<br>Int. Cl. C08L23/08(2006.01)i, C08L23/10(2006.01)i, C08L53/00(2006.01)i<br>FI: C08L23/10, C08L23/08, C08L53/00<br>According to International Patent Classification (IPC) or to both national classification and IPC | |

**B. FIELDS SEARCHED**

Minimum documentation searched (classification system followed by classification symbols)
Int. Cl. C08L23/08, C08L23/10, C08L53/00

Documentation searched other than minimum documentation to the extent that such documents are included in the fields searched
Published examined utility model applications of Japan   1922-1996
Published unexamined utility model applications of Japan  1971-2020
Registered utility model specifications of Japan      1996-2020
Published registered utility model applications of Japan  1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-86529 A (PRIME POLYMER CO., LTD.) 07 May 2015, entire document | 1-5 |
| A | WO 2017/213126 A1 (SUMITOMO CHEMICAL CO., LTD.) 14 December 2017, entire document | 1-5 |
| A | JP 2011-500946 A (DOW GLOBAL TECHNOLOGIES INC.) 06 January 2011, entire document | 1-5 |
| A | JP 2011-500945 A (DOW GLOBAL TECHNOLOGIES INC.) 06 January 2011, entire document | 1-5 |
| A | JP 2009-132893 A (SUMITOMO CHEMICAL CO., LTD.) 18 June 2009, entire document | 1-5 |

☐ Further documents are listed in the continuation of Box C.     ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>25.05.2020 | Date of mailing of the international search report<br>09.06.2020 |
| Name and mailing address of the ISA/<br>   Japan Patent Office<br>   3-4-3, Kasumigaseki, Chiyoda-ku,<br>   Tokyo 100-8915, Japan | Authorized officer<br><br>Telephone No. |

Form PCT/ISA/210 (second sheet) (January 2015)

**INTERNATIONAL SEARCH REPORT**
Information on patent family members

| International application No. |
| --- |
| PCT/JP2020/013266 |

| Patent Documents referred to in the Report | Publication Date | Patent Family | Publication Date |
| --- | --- | --- | --- |
| JP 2015-86529 A | 07.05.2015 | US 2016/0273255 A1 entire document WO 2015/064001 A1 CN 105683475 A | |
| WO 2017/213126 A1 | 14.12.2017 | US 2019/0264016 A1 entire document EP 3467023 A1 CN 109312126 A | |
| JP 2011-500946 A | 06.01.2011 | US 2009/0105397 A1 entire document WO 2009/055486 A1 EP 2205674 A2 CN 101835837 A KR 10-2010-0095534 A | |
| JP 2011-500945 A | 06.01.2011 | US 2009/0105397 A1 entire document WO 2009/055482 A1 EP 2205674 A2 CN 101835837 A KR 10-2010-0095534 A | |
| JP 2009-132893 A | 18.06.2009 | US 2010/0298456 A1 entire document WO 2009/057825 A1 CN 101842436 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011088955 A
- JP 61218606 A
- JP 5194685 A
- JP 7216017 A
- JP 9316147 A
- JP 10212319 A
- JP 2004182981 A
- JP 55075410 A
- JP 2565753 B
- US 37683506
- US 68644407
- EP 1892264 A
- EP 0879830 A1

**Non-patent literature cited in the description**

- Polymer Solution, Polymer Experiment. Kyoritsu Shuppan Co., Ltd, 1982, vol. 11, 491
- **A. ZAMBELLI et al.** *Macromolecules,* 1973, vol. 6, 925
- *Macromolecules,* 1975, vol. 8, 687
- **KAKUGO.** *Macromolecules,* 1982, vol. 15, 1150-1152